# EUROPEAN PATENT SPECIFICATION

(11) **EP 3 708 885 B1**
(45) Date of publication and mention of the grant of the patent: **04.01.2023**
(21) Application number: 19425015.5
(22) Date of filing: 11.03.2019
(51) Int. Cl.: F16K 3/24, F16K 3/32, F16K 31/524, F16K 31/56

(54) **IMPROVED DISPENSING CARTRIDGE FOR DISPENSING WATER IN A WATER SYSTEM**
VERBESSERTE AUSGABEKARTUSCHE ZUR ABGABE VON WASSER IN EINEM WASSERSYSTEM
CARTOUCHE DE DISTRIBUTION AMÉLIORÉE POUR DISTRIBUER DE L'EAU DANS UN SYSTÈME D'EAU

(43) Date of publication of application: 16.09.2020
(73) Proprietor: CRISTINA S.r.l., 28024 Gozzano (NO) (IT)
(72) Inventor: Caleffi, Marco, I-28024 Gozzano, Novara (IT)
(74) Representative: Gualeni, Nadia

(56) References cited:
- EP-A1- 0 831 164
- WO-A1-88/09893
- DE-U1- 8 319 446
- GB-A- 2 305 708
- US-A- 4 052 998

## Description

### FIELD OF APPLICATION

The present invention relates to an improved cartridge for dispensing water in a water system.

### PRIOR ART

In the taps and fittings sector, various types of water dispensing cartridges are known.

The most common cartridges also known as mixing cartridges comprise mechanisms capable of mixing two fluids at different temperatures, typically hot water and cold water, and also changing the flow rate dispensed.

These solutions provide that the temperature adjustment, i.e. the adjustment of the mixing of the flow rates of the two liquids at different temperatures from each other, occurs by rotating a control lever (integral with the relative inner cartridge), while the flow rate is adjusted progressively, thereby raising (to increase the flow rate) or lowering (to reduce the flow rate) the same control lever.

The aforementioned solutions do not allow the flow rate to be maintained since this adjustment is always progressive: one switches from increasingly closed to open. On the other hand, they allow the adjustment of the mixing between the fluids and therefore the temperature of the mixed water dispensed to be maintained.

Actually, the need is also felt to be able to maintain the flow rate adjustment since the temperature adjustment can be referred to the use of special thermostatic cartridges arranged for this purpose.

In the prior art there are solutions for hydraulic cartridges which allow the flow rate to be adjusted by rotating a knob and for allowing/inhibiting the dispensing of said flow rate by the repeated pressure of said knob, typically by means of a snap mechanism.

In this way, the user can adjust the flow rate simply by changing the angular position of the knob both during dispensing and when the flow is stopped. The temperature adjustment, as seen, can be achieved by connecting in series a thermostatic cartridge to the dispensing cartridge.

However, these known solutions are not free from drawbacks and limitations.

In fact, in known solutions there are frequent phenomena of vibrations induced on the components of the cartridge, and therefore on the knob, due to the water under pressure that passes therethrough. Moreover, in known solutions, pressurized water tends to oppose the actuation of the knob. In other words, in order to be able to open and/or close the water dispensing, the user must overcome not only the resistance of the spring of the cartridge release mechanism, but also the pressure exerted by the water itself. Moreover, the same action of the water, in the known solutions, tends to rotate the knob itself, thus modifying the adjustment of the flow rate set by the user.

In other words, the known solutions are not balanced with respect to the action exerted by the water and are therefore inconvenient to operate (since the user must overcome both the resistance of the spring of the mechanism and the resistance of the water pressure) and tend to vibrate (generating also annoying noises during the dispensing of water).

In order to solve the aforementioned axial balancing problems, the known solutions provide for the use of piloted controls, actually implementing solenoid valves which, of course, are particularly complex and expensive.

Therefore, the known dispensing cartridges have a complex construction, since they provide many internal components, thus being expensive to produce. Known solutions according to the preamble of claim 1 are disclosed by GB2305708A.

### DISCLOSURE OF THE INVENTION

It is therefore felt in the art the need to provide a dispensing cartridge which allows the adjustment of the flow rate by rotation and activation/deactivation of the dispensing of water by pressure without exhibiting the drawbacks of the solutions of the prior art.

Such a need is met by a dispensing cartridge according to claim 1.

Other embodiments of the present invention are described in the dependent claims.

### DESCRIPTION OF THE DRAWINGS

Further features and advantages of the present invention will become more understandable from the following description of its preferred and non-limiting embodiments, wherein:

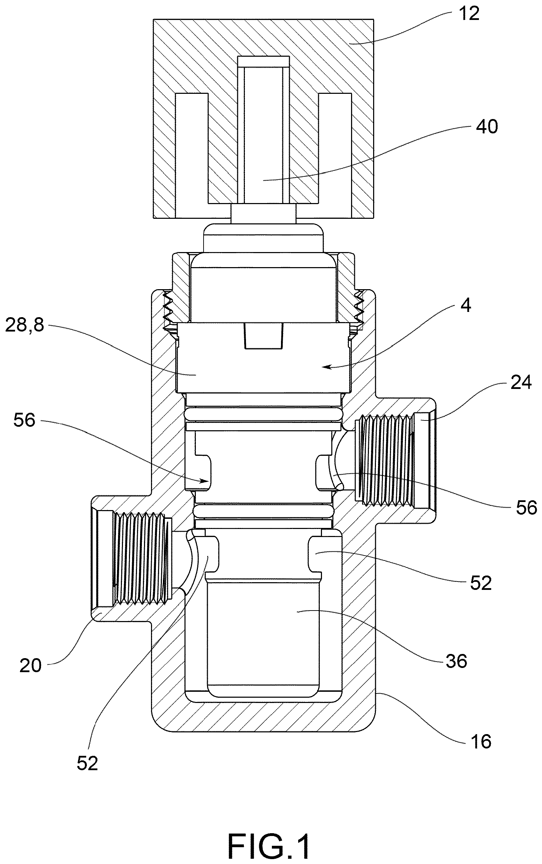

figure 1 shows an assembled partially sectional view of a dispensing cartridge according to an embodiment of the present invention;

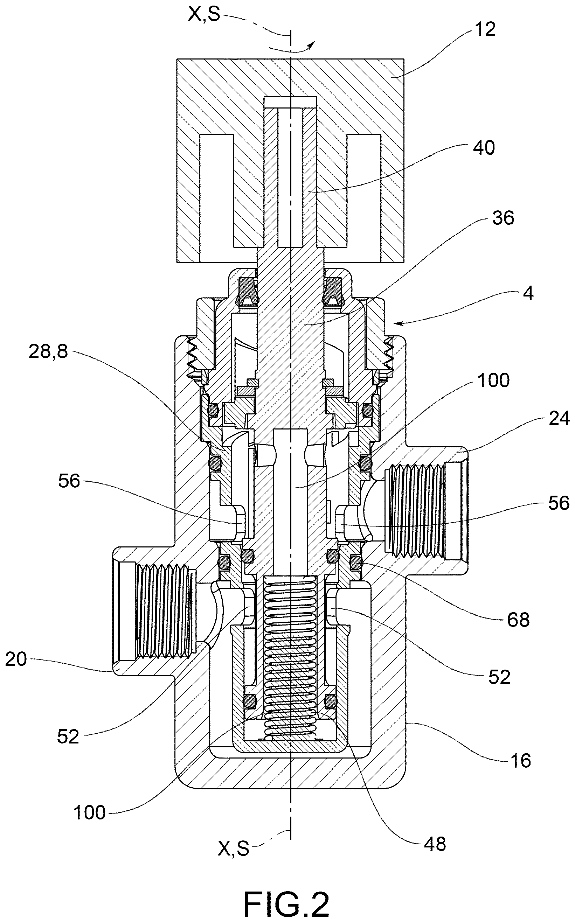

figure 2 shows a fully sectional view of the cartridge in figure 1;

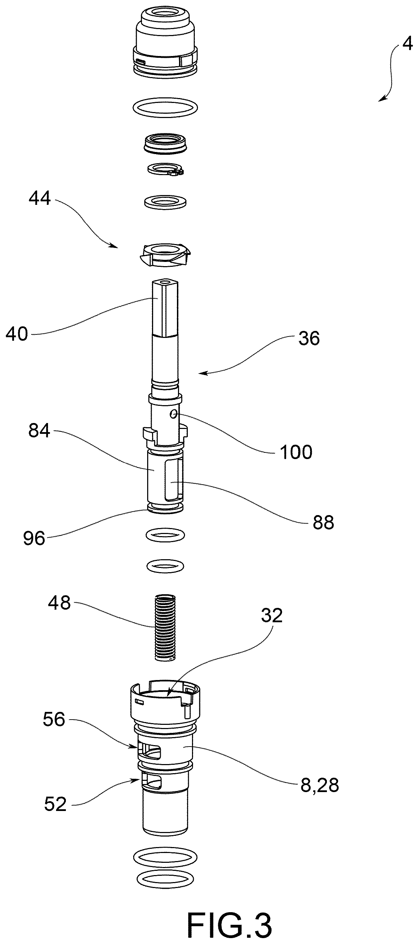

figure 3 shows a perspective view in separate parts of a dispensing cartridge according to an embodiment of the present invention;

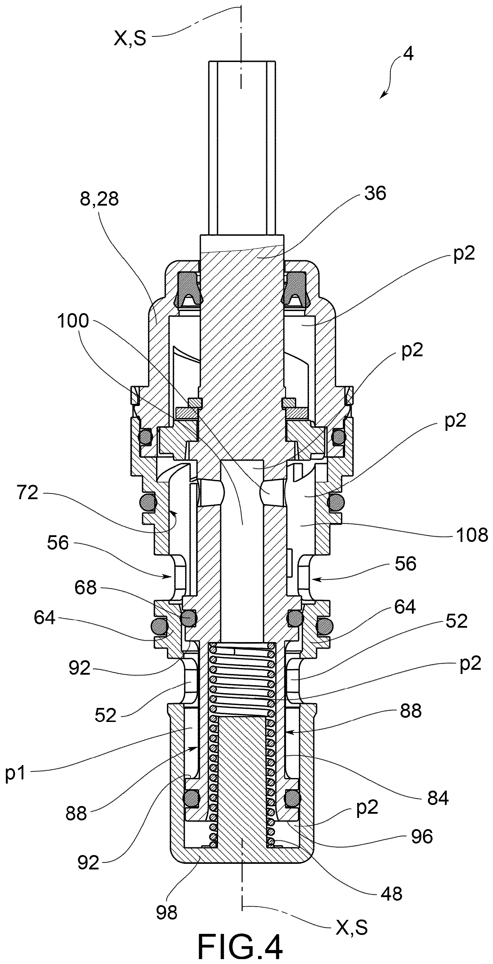

figure 4 shows a sectional view of an assembled cartridge of the present invention, in which the pressures of the incoming and outgoing liquids are highlighted;

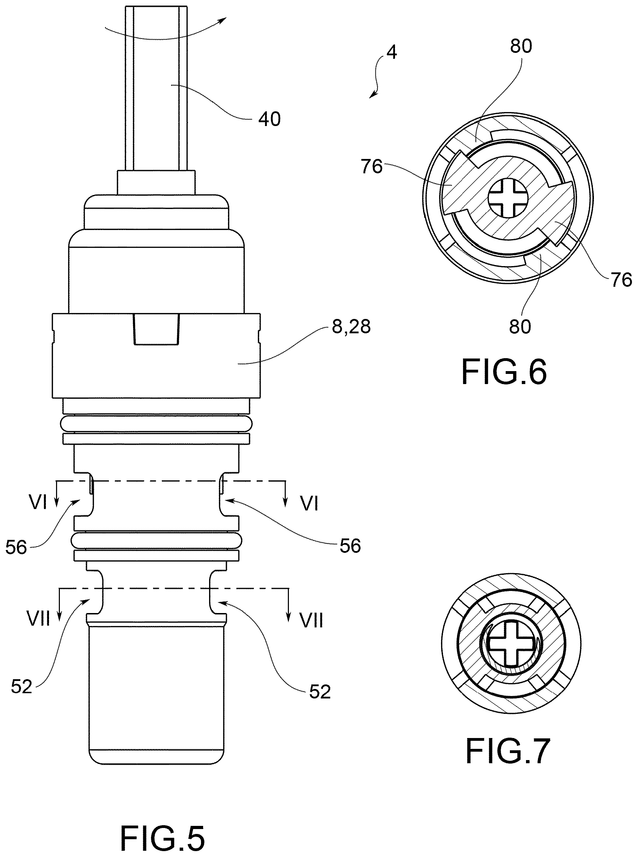

figure 5 shows a side view of an assembled cartridge according to an embodiment of the present invention, in minimum flow adjustment and in the closed position;
figure 6 shows a sectional view of the cartridge in figure 5, along the section plane VI-VI in figure 5;
figure 7 shows a sectional view of the cartridge in figure 5, along the section plane VII-VII in figure 5;

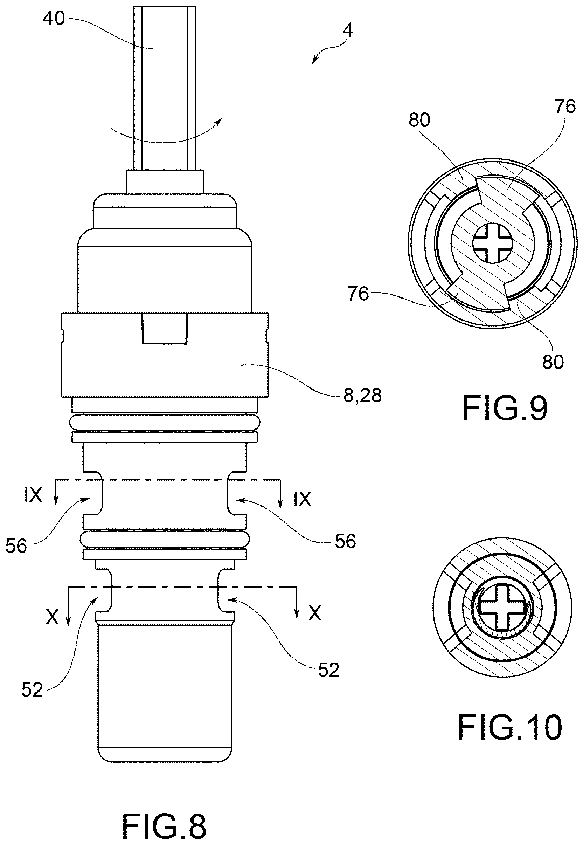

figure 8 shows a side view of an assembled cartridge according to an embodiment of the present invention, in maximum flow adjustment and in the closed position;
figure 9 shows a sectional view of the cartridge in figure 8, along the section plane IX-IX in figure 8;
figure 10 shows a sectional view of the cartridge in figure 8, along the section plane X-X in figure 8;
figure 11 shows a sectional view of a cartridge according to the invention, in a blocked dispensing configuration;
figure 12 shows a sectional view of the cartridge in figure 11, in a minimum dispensing flow rate configuration;
figure 13 shows a sectional view of the cartridge in figure 11, in a maximum dispensing flow rate configuration.

Elements or parts of elements in common to the embodiments described below are referred to with the same reference numerals.

### DETAILED DESCRIPTION

With reference to the aforementioned figures, a water dispensing cartridge, typically for sanitary fixtures but also for showers, kitchen environments and the like, is generally indicated with reference numeral 4.

It should be noted that the applications listed above are purely indicative and not in any way limiting in relation to the present invention.

The dispensing cartridge 4 is provided with a body 8 and a control knob 12 for the relative actuation.

The body 8 is preferably inserted in a casing 16 which comprises at least one water inlet 20 and at least one water outlet 24, for example internally threaded.

The control knob 12 is at least external with respect to the casing 16 and to the body 8.

The body 8 defines a side wall 28 which delimits a cavity 32 which houses a piston 36 provided with a connecting stem 40 to said control knob 12.

The piston 36, as better described below, extends and moves along an axial direction X-X.

The dispensing cartridge 4 comprises a mechanism 44 provided with an elastic return means 48 acting on said piston 36, so as to allow the axial displacement of the piston 36 from a closed position, in which the dispensing of water is inhibited, to a dispensing position in which the dispensing of water is allowed.

Preferably, said mechanism 44 is a snap mechanism capable of stably positioning the piston 36 in said open and closed positions, acting axially on said control knob 12.

The snap mechanism 44 comprises for example a ring 45 provided with a plurality of peripheral wedges 46 suitable for interfacing with corresponding blocks (not shown).

The snap mechanism 44 comprises, as an elastic return means, a lower spring arranged axially upstream with respect to the inlet opening 52 and acting on a rear wall 96 of the piston 36 delimited by a bottom 98 of the body 8, diametrically opposite to the control knob 12.

The side wall 28 of the body 8 is provided with at least one inlet opening 52 adapted to be connected to a liquid under pressure, for example through the water inlet 20, and at least one outlet opening 56, connected for example to said water outlet 24 for dispensing the liquid.

Said inlet and outlet openings 52, 56 are axially offset so as to be separated by an intermediate portion 64 of the body 8.

Preferably, said side wall 28 of the body 8 of the dispensing cartridge 4 comprises a pair of inlet openings 52 and a pair of outlet openings 56, diametrically opposite each other and aligned at the same axial heights, respectively.

The piston 36 comprises a sealing gasket 68 which in said closed position is axially located between the inlet opening 52 and the outlet opening 56 at said intermediate portion 64, and in said dispensing position is at least partially beyond the intermediate portion 64 so as to put in said inlet 52 and outlet 56 openings in fluid communication with each other. Usually, in said dispensing position the sealing gasket 68 is at least partially beyond the intermediate portion 64 on the side of the outlet opening 56; in any case, for the purposes of the fluid connection between the inlet opening 52 and the outlet opening 56, the sealing gasket 68 may also be at least partly beyond the intermediate portion 64 on the side of the inlet opening 52.

The sealing gasket 68 is typically an O-ring, but it is also possible to provide gaskets of different types. The choice of gasket materials can also be varied.

The sealing gasket makes a hydraulic seal on an inner side wall 72 of the body 8, in particular of the intermediate portion 64 of the body 8.

According to a possible embodiment, the piston 36 comprises at least one fin 76 which extends substantially radially with respect to the piston 36, along a radial direction belonging to a plane perpendicular to the axial direction X-X. Said fin 36 has the function of adjusting the end of stroke to the rotation of the control knob 12 for selecting the minimum (or zero) flow rate and the maximum flow rate.

According to an embodiment, the piston 36 comprises a pair of fins 76, diametrically opposite and symmetrical to each other with respect to an axis of symmetry S-S of the piston 36 parallel to said axial direction X-X, said fins 76 being subjected to the thrust action of water, in dispensing conditions.

According to an embodiment, said fins 76 are arranged axially downstream of said sealing gasket 68.

Said fins occupy, on the piston 36, an angular portion smaller than 180 degrees.

Furthermore, the fins 36 also have a function of adjusting the end of stroke to the rotation of the control knob for selecting the minimum (or zero) flow rate and the maximum flow rate.

In particular, the body 8 comprises a pair of abutments 80, diametrically opposed to each other, suitable for interfacing with said fins 76 for determining the respective end of stroke to the rotation of the piston 36, said end of stroke defining the flow rate and the minimum dispensing rate of the dispensing cartridge 4.

In relation to cartridge adjustment the piston 36 comprises a variable cross section at an adjustment portion 84 thereof which faces said inlet 52 and outlet 56 openings of the body 8, so as to vary the passage gap and thus the flow rate of water dispensed as a function of the rotation of the piston 36 with respect to the body 8, around the axial direction X-X. The cross section is the section obtained with a cross-section plane, perpendicular to said axial direction X-X.

In other words, the passage gap of the water flow rate between the inlet opening 52 and the outlet opening 56 is given by the space delimited between the inner side wall 72 of the intermediate portion 64 and the adjustment portion 84 of the piston 36, variable as a function of its rotation/orientation with respect to the axis of symmetry S-S or axial direction X-X.

Said adjustment portion 84 comprises a pair of recesses 88, symmetrical to each other, which identify a pair of axial shoulders 92 equal to and opposite each other along the axial direction X-X. The fact that these axial shoulders 92 are opposite but equal to one another causes the piston to be self-balanced to the axial thrusts given by the inlet liquid, so that the user, in order to actuate the piston, must overcome the single preload thrust of the spring or elastic return means 48.

Preferably, said recesses 88 are angularly offset and not aligned with respect to said fins 76.

The piston 36 comprises an inner channel 100 which fluidly connects said base 98 of the body 8 with at least one outlet opening 56.

For example, said inner channel 100 fluidly connects the bottom 98 of the body 8 with an upper portion 108 of the body 8, arranged downstream of the sealing gasket 68.

The presence of the inner channel 100 serves to allow the control knob 12 to be pressed since the fluid which is inside the bottom 98 of the body 8 and which is pushed by the rear wall 96 of the piston 36 can ascend the inner channel 100 and exit through the upper portion 108 in the outlet opening 56.

The present invention also relates to a dispensing unit comprising a dispensing cartridge 4 as described above and a thermostatic cartridge (not shown) arranged upstream of said dispensing cartridge 4 so as to supply the inlet opening 52 of said dispensing cartridge 4 with a water flow preset to a predetermined temperature.

In this way, the temperature is controlled by the thermostatic cartridge, while the control knob is used for opening/closing commands (by axial pressure of the control knob) and for adjusting the flow rate (by rotating the control knob).

The operation of a dispensing cartridge according to the present invention shall now be described.

As mentioned above, the cartridge according to the present invention allows separating the flow rate adjustment from the water opening and closing control.

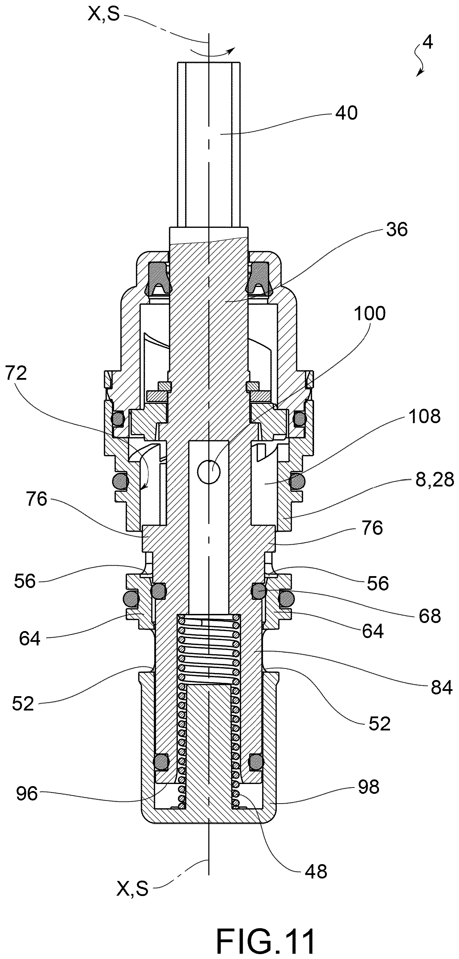

Figures 11-13 show the following three operating conditions.

In figure 11, the cartridge 4 is in the closed condition; in fact, the sealing gasket 68 is located axially in the intermediate portion 64 and is sealed against the inner side wall 72 of said intermediate portion 64. It should be noted that in this figure 11, the piston is rotated to the minimum flow condition. In fact, the gap between the adjustment portion 84 of the piston 36 and the inner side wall 72 of the intermediate portion 64 is the minimum one: in other words, the piston 36 offers to the inner side wall 72, facing it, its maximum diameter (or width).

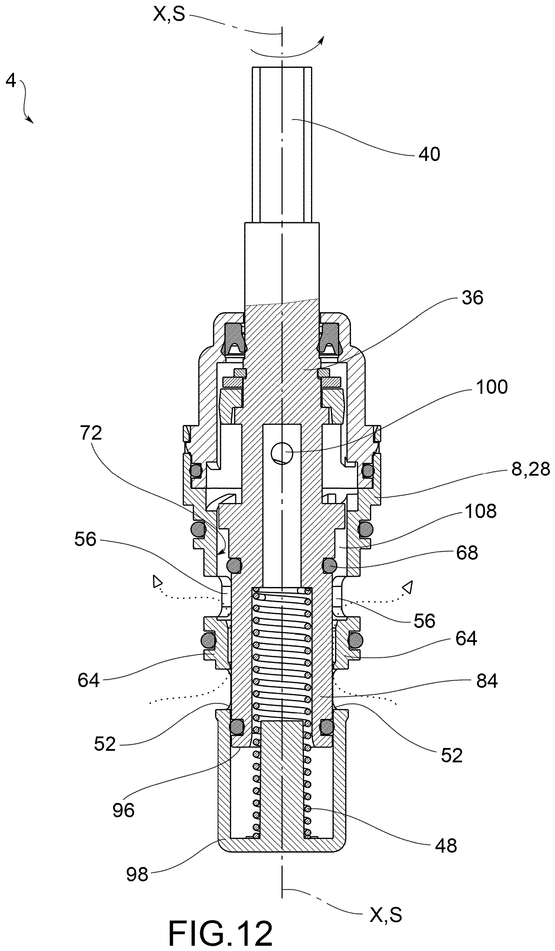

Figure 12 shows the dispensing condition with minimum flow rate. In fact, the piston is raised axially so as to disengage the sealing gasket 68 from the inner side wall 72 of the intermediate portion 64. In this way, the water can pass directly from the inlet opening 52 to the outlet opening 56, through the minimum gap between the adjustment portion 84 of the piston 36 and the inner side wall 72 of the intermediate portion 64.

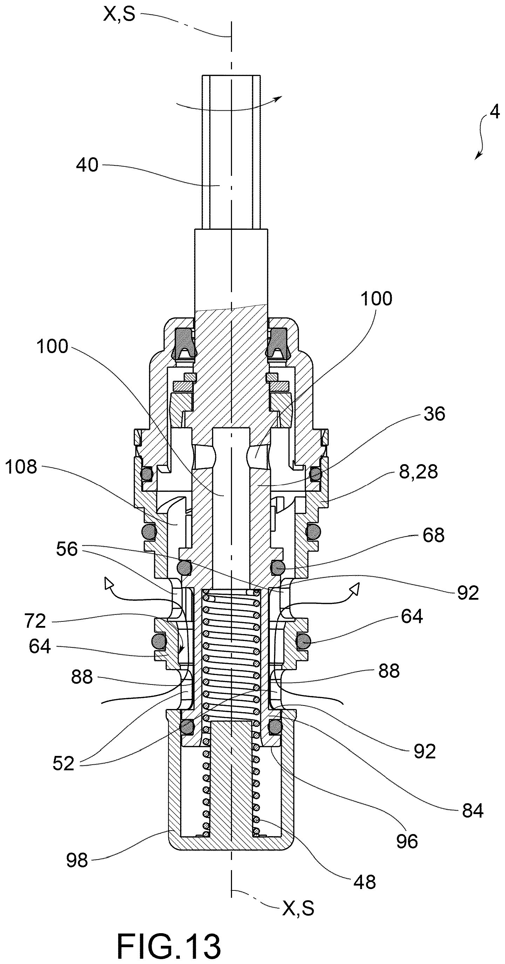

Lastly, figure 13 shows the dispensing condition with maximum flow rate. In fact, the piston is raised axially so as to disengage the sealing gasket 68 from the inner side wall 72 of the intermediate portion 64. In this way, the water can pass directly from the inlet opening 52 to the outlet opening 56, through the maximum gap between the adjustment portion 84 of the piston 36 and the inner side wall 72 of the intermediate portion 64. This gap is maximum because the adjustment portion 84 of the piston 36 offers the recesses 88 to the inner side wall 72 of the intermediate portion 64.

In the passage steps of the water from the inlet pressure p1, supplied by the water supply or intake, to the dispensing or outlet pressure p2 supplied to the user, a pressure drop occurs due to internal laminations. In other words, the dispensing pressure p2 is lower than the inlet or supply pressure p1.

It should be noted that the axial balancing of the dispensing cartridge 4, in particular of the piston 36, arises from a balance between the elastic force of the elastic return means 48, for example of the spring, and the balancing of the pressures exerted by the liquid to be dispensed. There is no doubt that the spring has a return action that depends on its extension. Therefore, if the cartridge is dispensing, the thrust exerted by the spring which opposes the manual closure is initially very low, while the pressure exerted by the outgoing water (p2) is relatively high. As the control knob is pressed to close the dispensing, on the one hand the compression of the spring is obtained, and therefore the increase of the elastic thrust, and on the other the reduction of the hydraulic thrust so that the outlet pressure is increasingly reduced. The same is true, of course, on the contrary, that is, when the supply is being opened.

As can be appreciated from the description, the present invention allows overcoming the drawbacks of the prior art.

In particular, the invention provides a dispensing cartridge solution which is simple and cost-effective to produce, since it comprises a very limited number of internal components.

Moreover, the dispensing cartridge, or rather its internal piston, is balanced with respect to the pressure action exerted by the water dispensed.

In fact, the piston is symmetrical, and therefore balanced, with respect to the thrust action of water: in this way it does not tend to rotate during the passage of water and therefore the flow rate setting requested by the user does not change.

Furthermore, no annoying vibrations are induced on the piston and therefore on the knob connected thereto.

Furthermore, the piston is also balanced with respect to the thrust action of water: therefore, in order to activate/deactivate the water dispensing, the user must only overcome the elastic action of the spring of the piston mechanism but not also the force resulting from the passage of water, as occurs in the solutions of the prior art.

A man skilled in the art may make several changes and adjustments to the dispensing cartridge described above in order to meet specific and incidental needs, all falling within the scope of protection defined in the following claims.

## Claims

1. Dispensing cartridge (4) provided with a body (8) and a control knob (12) for the relative actuation, the body (8) defining a side wall (28) which delimits a cavity (32) which houses a piston ( 36) provided with a connecting stem (40) to said control knob (12), the piston (36) extending and moving along an axial direction (X-X),
- the dispensing cartridge (4) comprising a mechanism (44) provided with an elastic return means (48) acting on said piston (36), so as to allow the axial displacement of the piston (36) from a closed position, in which the dispensing of water is inhibited, to a dispensing position in which the dispensing of water is allowed,
- wherein said side wall (28) is provided with at least one inlet opening (52) adapted to be connected to a pressurized liquid and at least one outlet opening (56), said inlet (52) and outlet (56) openings being axially offset so as to be separated by an intermediate portion (64) of the body (8),
- wherein the piston (36) comprises a sealing gasket (68) which in said closed position is axially located between the inlet opening (52) and the outlet opening (56) at said intermediate portion (64), and in said dispensing position is at least partially beyond the intermediate portion (64) so as to put in said inlet and outlet openings (52, 56) in fluid communication with each other
**characterised in that**
the piston (36) comprises a variable cross section at an adjustment portion (84) thereof which faces said inlet (52) and outlet (56) openings of the body (8), so as to vary a passage gap and the flow rate of water dispensed as a function of the rotation of the piston (36) with respect to the body (8), around the axial direction (X-X),
wherein said adjustment portion (84) comprises a pair of recesses (88), symmetrical to each other, which identify a pair of axial shoulders (92) equal to and opposite each other along the axial direction (X-X).

2. Dispensing cartridge (4) according to claim 1, wherein the piston (36) comprises at least one fin (76) which extends substantially radially with respect to the piston (36), along a radial direction belonging to a plane perpendicular to the axial direction (X-X), said fin (36) having the function of adjusting the end of stroke to the rotation of the control knob (12) for selecting the minimum flow rate and the maximum flow rate.

3. Dispensing cartridge (4) according to claim 2, wherein the piston (36) comprises a pair of fins (76), diametrically opposed to each other with respect to a symmetry axis (S-S) of the piston (36) parallel to said axial direction (X-X).

4. Dispensing cartridge (4) according to claim 2, wherein said at least one fin (76) is arranged axially downstream of said sealing gasket (68).

5. Dispensing cartridge (4) according to claim 3, wherein said fins (76) occupy, on the piston (36), an angular portion of less than 180 degrees.

6. Dispensing cartridge (4) according to any one of claims 2 to 5, wherein the body (8) comprises a pair of abutments (80), diametrically opposed to each other, suitable for interfacing with said at least one fin (76) for determining the respective end of stroke to the rotation of the piston (36), said end of stroke defining the flow rate and the minimum dispensing rate of the dispensing cartridge (4).

7. Dispensing cartridge (4) according to any one of claims 2 to 6, wherein said recesses (88) are angularly offset and not aligned with respect to said fins (76).

8. Dispensing cartridge (4) according to any one of the preceding claims, wherein said mechanism (44) is a snap mechanism capable of stably positioning the piston (36) in said open and closed positions, acting axially on said control knob (12).

9. Dispensing cartridge (4) according to claim 8, wherein the snap mechanism (44) comprises a ring nut (45) provided with a plurality of peripheral wedges (46) suitable for interfacing with corresponding blocks.

10. Dispensing cartridge (4) according to claim 8 or 9, wherein the snap mechanism (44) comprises a lower spring (48) arranged axially upstream with respect to the inlet opening (52) and acting on a rear wall (96 ) of the piston (36) delimited by a bottom (98) of the body (8), diametrically opposite to the control knob (12).

11. Dispensing cartridge (4) according to claim 10, wherein the piston (36) comprises an inner channel (100) which fluidly connects said base (98) of the body (8) with at least one outlet opening (56).

12. Dispensing cartridge (4) according to claim 11, wherein said inner channel (100) fluidly connects the bottom (98) of the body (8) with an upper portion (108) of the body (8), arranged downstream of the sealing gasket (68).

13. Dispensing cartridge (4) according to any one of the preceding claims, wherein said side wall (28) of the dispensing cartridge (4) comprises a pair of inlet openings (52) and a pair of outlet openings (56), diametrically opposite each other and aligned at the same axial heights, respectively.

14. Dispensing unit comprising a dispensing cartridge (4) according to any one of the preceding claims and a thermostatic cartridge arranged upstream of said dispensing cartridge so as to supply the inlet opening (52) of said dispensing cartridge (4) with a water flow preset to a predetermined temperature.

## Patentansprüche

1. Abgabekartusche (4), die mit einem Körper (8) und einem Steuerknopf (12) für die relative Betätigung versehen ist, wobei der Körper (8) eine Seitenwand (28) definiert, die einen Hohlraum (32) begrenzt, der einen Kolben (36) aufnimmt, der mit einem Verbindungsschaft (40) zum Steuerknopf (12) versehen ist, wobei sich der Kolben (36) entlang einer Axialrichtung (X-X) erstreckt und bewegt,
- wobei die Abgabekartusche (4) einen Mechanismus (44) aufweist, der mit einem elastischen Rückstellmittel (48) versehen ist, das auf den Kolben (36) einwirkt, um die Axialverschiebung des Kolbens (36) aus einer geschlossenen Stellung, in der das Abgeben von Wasser verhindert wird, in eine Abgabestellung zu ermöglichen, in der das Abgeben von Wasser erlaubt ist,
- wobei die Seitenwand (28) mit zumindest einer Einlassöffnung (52), die eingerichtet ist, mit einer druckbeaufschlagten Flüssigkeit verbunden zu werden, und zumindest einer Auslassöffnung (56) versehen ist, wobei die Einlass- (52) und Auslassöffnungen (56) axial versetzt sind, so dass sie durch einen Zwischenabschnitt 20 (64) des Körpers (8) getrennt sind,
- wobei der Kolben (36) eine Flanschdichtung (68) aufweist, die sich in der geschlossenen Stellung axial zwischen der Einlassöffnung (52) und der Auslassöffnung (56) an dem Zwischenabschnitt (64) befindet und in der Abgabestellung zumindest teilweise über dem Zwischenabschnitt (64) liegt, um in die Einlass- und Auslassöffnungen (52, 56) in fluidische Kommunikation miteinander zu bringen,
**dadurch gekennzeichnet, dass**
der Kolben (36) einen variablen Querschnitt in einem Einstellabschnitt (84) desselben aufweist, der den Einlass-(52) und Auslassöffnungen (56) des Körpers (8) zugewandt ist, um einen Durchlassspalt und die Durchflussrate des abgegebenen Wassers in Abhängigkeit von der Drehung des Kolbens (36) in Bezug auf den Körper (8) um die Axialrichtung (X-X) zu variieren,
wobei der Einstellabschnitt (84) ein Paar von Ausnehmungen (88) aufweist, die zueinander symmetrisch sind, die ein Paar axialer Schultern (92) identifizieren, die gleich sind und einander entlang der Axialrichtung (X-X) gegenüberliegen.

2. Abgabekartusche (4) nach Anspruch 1, wobei der Kolben (36) zumindest eine Rippe (76) aufweist, die sich in Bezug auf den Kolben (36) im Wesentlichen radial erstreckt, entlang einer Radialrichtung, die zu einer Ebene senkrecht zur Axialrichtung (X-X) gehört, wobei die Rippe (36) die Funktion zum Anpassen des Endes des Hubs an die Drehung des Steuerknopfs (12) aufweist, um die minimale Durchflussrate und die maximale Durchflussrate zu wählen.

3. Abgabekartusche (4) nach Anspruch 2, wobei der Kolben (36) ein Paar von Rippen (76) aufweist, die einander in Bezug auf eine Symmetrieachse (S-S) des Kolbens (36) parallel zur Axialrichtung (X-X) diametral gegenüberliegen.

4. Abgabekartusche (4) nach Anspruch 2, wobei die zumindest eine Rippe (76) axial stromabwärts der Dichtung (68) angeordnet ist.

5. Abgabekartusche (4) nach Anspruch 3, wobei die Rippen (76) auf dem Kolben (36) einen Winkelabschnitt von weniger als 180 Grad einnehmen.

6. Abgabekartusche (4) nach einem der Ansprüche 2 bis 5, wobei der Körper (8) ein Paar von einander diametral gegenüberliegenden Anschlägen (80) aufweist, die geeignet sind, sich mit der zumindest einen Rippe (76) zu koppeln, um das jeweilige Hubende zur Drehung des Kolbens (36) zu bestimmen, wobei das Hubende die Durchflussrate und die minimale Abgaberate der Abgabekartusche (4) definiert.

7. Abgabekartusche (4) nach einem der Ansprüche 2 bis 6, wobei die Ausnehmungen (88) in Bezug auf die Rippen (76) winkelversetzt und nicht fluchtend sind.

8. Abgabekartusche (4) nach einem der vorstehenden Ansprüche, wobei der Mechanismus (44) ein Schnappmechanismus ist, der in der Lage ist, den Kolben (36) stabil in der offenen und geschlossenen Stellung zu positionieren, wobei er axial auf den Steuerknopf (12) wirkt.

9. Abgabekartusche (4) nach Anspruch 8, wobei der Schnappmechanismus (44) einen Schraubring (45) aufweist, der mit einer Vielzahl von Umfangskeilen (46) versehen ist, die sich zur Kopplung mit entsprechenden Blöcken eignen.

10. Abgabekartusche (4) nach Anspruch 8 oder 9, wobei der Schnappmechanismus (44) eine untere Feder (48) aufweist, die in Bezug auf die Einlassöffnung (52) axial stromaufwärts angeordnet ist und auf eine Rückwand (96) des Kolbens (36) einwirkt, der durch einen Boden (98) des Körpers (8) diametral gegenüberliegend des Steuerknopfs (12) begrenzt wird.

11. Abgabekartusche (4) nach Anspruch 10, wobei der Kolben (36) einen inneren Kanal (100) aufweist, der die Basis (98) des Körpers (8) mit zumindest einer Auslassöffnung (56) fluidisch verbindet.

12. Abgabekartusche (4) nach Anspruch 11, wobei der innere Kanal (100) den Boden (98) des Körpers (8) mit einem oberen Abschnitt (108) des Körpers (8), der stromabwärts der Dichtung (68) angeordnet ist, fluidisch verbindet.

13. Abgabekartusche (4) nach einem der vorstehenden Ansprüche, wobei die Seitenwand (28) der Abgabekartusche (4) ein Paar von Einlassöffnungen (52) und ein Paar von Auslassöffnungen (56) aufweist, die einander diametral gegenüberliegen und jeweils auf den gleichen axialen Höhen fluchten.

14. Abgabeeinheit, aufweisend eine Abgabekartusche (4) nach einem der vorstehenden Ansprüche und eine Thermostatkartusche, die stromaufwärts der Abgabekartusche angeordnet ist, um der Einlassöffnung (52) der Abgabekartusche (4) mit einem auf eine vorbestimmte Temperatur voreingestellten Wasserstrom zuzuführen.

## Revendications

1. Cartouche de distribution (4) pourvue d'un corps (8) et d'un bouton de commande (12) pour l'actionnement relatif, le corps (8) définissant une paroi latérale (28) qui délimite une cavité (32) qui loge un piston (36) pourvu d'une tige de liaison (40) audit bouton de commande (12), le piston (36) s'étendant et se déplaçant suivant une direction axiale (X-X),
- la cartouche de distribution (4) comprenant un mécanisme (44) pourvu d'un moyen de rappel élastique (48) agissant sur ledit piston (36), de façon à permettre le déplacement axial du piston (36) d'une position fermée, dans laquelle la distribution d'eau est inhibée, à une position de distribution dans laquelle la distribution d'eau est autorisée,
- dans laquelle ladite paroi latérale (28) est pourvue d'au moins une ouverture d'entrée (52) adaptée pour être reliée à un liquide sous pression et d'au moins une ouverture de sortie (56), lesdites ouvertures d'entrée (52) et de sortie (56) étant décalées axialement de façon à être séparées par une portion intermédiaire (64) du corps (8),
- dans laquelle le piston (36) comprend un joint d'étanchéité (68) qui, dans ladite position fermée, est situé axialement entre l'ouverture d'entrée (52) et l'ouverture de sortie (56) au niveau de ladite portion intermédiaire (64), et qui, dans ladite position de distribution, est au moins partiellement au-delà de la portion intermédiaire (64) de façon à mettre lesdites ouvertures d'entrée et de sortie (52, 56) en communication fluidique l'une avec l'autre
**caractérisée en ce que**
le piston (36) comprend une section transversale variable au niveau d'une portion de réglage (84) de celui-ci qui fait face auxdites ouvertures d'entrée (52) et de sortie (56) du corps (8), de façon à faire varier un espace de passage et le débit d'eau distribuée en fonction de la rotation du piston (36) par rapport au corps (8), autour de la direction axiale (X-X),
dans laquelle ladite portion de réglage (84) comprend une paire d'évidements (88), symétriques l'un à l'autre, qui identifient une paire d'épaulements axiaux (92) égaux et opposés l'un à l'autre suivant la direction axiale (X-X).

2. Cartouche de distribution (4) selon la revendication 1, dans laquelle le piston (36) comprend au moins une ailette (76) qui s'étend sensiblement radialement par rapport au piston (36), suivant une direction radiale appartenant à un plan perpendiculaire à la direction axiale (X-X), ladite ailette (36) ayant pour fonction de régler la fin de course à la rotation du bouton de commande (12) pour sélectionner le débit minimum et le débit maximum.

3. Cartouche de distribution (4) selon la revendication 2, dans laquelle le piston (36) comprend une paire d'ailettes (76), diamétralement opposées l'une à l'autre par rapport à un axe de symétrie (S-S) du piston (36) parallèle à ladite direction axiale (X-X).

4. Cartouche de distribution (4) selon la revendication 2, dans laquelle ladite au moins une ailette (76) est disposée axialement en aval dudit joint d'étanchéité (68).

5. Cartouche de distribution (4) selon la revendication 3, dans laquelle lesdites ailettes (76) occupent, sur le piston (36), une portion angulaire inférieure à 180 degrés.

6. Cartouche de distribution (4) selon l'une quelconque des revendications 2 à 5, dans laquelle le corps (8) comprend une paire de butées (80), diamétralement opposées l'une à l'autre, convenables pour faire interface avec ladite au moins une ailette (76) pour déterminer la fin de course respective à la rotation du piston (36), ladite fin de course définissant le débit et le taux de distribution minimal de la cartouche de distribution (4).

7. Cartouche de distribution (4) selon l'une quelconque des revendications 2 à 6, dans laquelle lesdits évidements (88) sont angulairement décalés et non alignés par rapport auxdites ailettes (76).

8. Cartouche de distribution (4) selon l'une quelconque des revendications précédentes, dans laquelle ledit mécanisme (44) est un mécanisme à encliquetage capable de positionner de manière stable le piston (36) dans lesdites positions ouverte et fermée, en agissant axialement sur ledit bouton de commande (12).

9. Cartouche de distribution (4) selon la revendication 8, dans laquelle le mécanisme d'encliquetage (44) comprend un écrou annulaire (45) pourvu d'une pluralité de cales périphériques (46) convenables pour faire interface avec des blocs correspondants.

10. Cartouche de distribution (4) selon la revendication 8 ou 9, dans laquelle le mécanisme d'encliquetage (44) comprend un ressort inférieur (48) disposé axialement en amont par rapport à l'ouverture d'entrée (52) et agissant sur une paroi arrière (96) du piston (36) délimitée par un fond (98) du corps (8), diamétralement opposé au bouton de commande (12).

11. Cartouche de distribution (4) selon la revendication 10, dans laquelle le piston (36) comprend un canal intérieur (100) qui relie fluidiquement ladite base (98) du corps (8) à au moins une ouverture de sortie (56).

12. Cartouche de distribution (4) selon la revendication 11, dans laquelle ledit canal intérieur (100) relie fluidiquement le fond (98) du corps (8) à une portion supérieure (108) du corps (8), disposée en aval du joint d'étanchéité (68).

13. Cartouche de distribution (4) selon l'une quelconque des revendications précédentes, dans laquelle ladite paroi latérale (28) de la cartouche de distribution (4) comprend une paire d'ouvertures d'entrée (52) et une paire d'ouvertures de sortie (56), diamétralement opposées l'une à l'autre et alignées aux mêmes hauteurs axiales, respectivement.

14. Unité de distribution comprenant une cartouche de distribution (4) selon l'une quelconque des revendications précédentes et une cartouche thermostatique disposée en amont de ladite cartouche de distribution de façon à alimenter l'ouverture d'entrée (52) de ladite cartouche de distribution (4) avec un débit d'eau préréglé à une température prédéterminée.
